# EUROPÄISCHE PATENTANMELDUNG

(11) **EP 3 075 769 A1**
(43) Veröffentlichungstag der Anmeldung: **05.10.2016**
(21) Anmeldenummer: 15161898.0
(22) Anmeldetag: 31.03.2015
(51) Int. Cl.: C08J 9/00, C08F 20/14

(54) **Herstellung eines PMMA-Schaumstoffs unter Verwendung von Vernetzern, Reglern und Treibmitteln**

(71) Anmelder: Evonik Röhm GmbH, 64293 Darmstadt (DE)
(72) Erfinder: RICHTER, Thomas, 64293 Darmstadt (DE); SEIPEL, Christoph, 64846 Gross-Zimmern (DE); BERNHARD, Kay, 64291 Darmstadt (DE); KRISHNAMOORTHY, Sivakumara K., 64347 Griesheim (DE); BÜHLER, Sebastian, 79104 Freiburg (DE)

(57) **Zusammenfassung**

Die vorliegende Erfindung betrifft neuartige PMMA-Schäume sowie deren Herstellung. Dabei werden bei der Herstellung Rezepturen eingesetzt, die neben geeigneten Treibmitteln vor allem, zumeist in niedrigen Konzentrationen, Vernetzer und Regler als Rezepturbestandteile aufweisen. Dabei konnte überraschend festgestellt werden, dass erfindungsgemäß ein stabiler, einfach herzustellender PMMA-Schaum mit sehr guten Eigenschaften erhalten werden kann.

## Beschreibung

### Gebiet der Erfindung

Die vorliegende Erfindung betrifft neuartige PMMA-Schäume, sowie deren Herstellung. Dabei werden bei der Herstellung Rezepturen eingesetzt, die neben geeigneten Treibmitteln vor allem, zumeist in niedrigen Konzentrationen Vernetzer und Regler als Rezepturbestandteile aufweisen. Dabei konnte überraschend festgestellt werden, dass erfindungsgemäß ein stabiler, einfach herzustellender PMMA-Schaum mit sehr guten Eigenschaften erhalten werden kann.

### Stand der Technik

Polymerhartschaumstoffe sind allgemein bekannt und finden Anwendung in unterschiedlichsten Bereichen wie z.B. als Isolationsmaterial, in Verpackungen sowie im Leichtbau. Speziell im Bereich des Leichtbaus sollten die Schaumstoffe hohe Festigkeiten bei geringer Dichte aufweisen. Verwendung finden hier unter anderem PVC-, PET-, spezielle PU- und P(M)I-(Poly(meth)acrylimid-)Schaumstoffe, die unter anderem als Kernmaterial in Sandwichkompositen Anwendung finden.

PMMA Schaumstoffe sind in der Literatur oft beschrieben, haben aber bis dato wenig bis keine industriellen Bedeutung erlangt. Ein Grund hierfür ist die häufig beschriebene, aber sehr komplizierte Herstellung über Autoklavenverfahren, bei welchen PMMA mit gasförmigen Treibmitteln, wie z.B. CO₂ oder N₂, unter hohen Drücken im Autoklaven beladen und dann bei Druckentspannung expandiert wird. PMMA Hartschaumstoffe die mit einem Treibmittel geschäumt werden, welches vor der Polymerisation zum Monomer zugegeben wird und nach der Polymerisation gelöst im Polymer vorliegt, sind dagegen wenig beschrieben. Dennoch wären PMMA-Schäume aufgrund ihrer Festigkeit und der hohen Witterungsstabilität sehr interessante Werkstoffe für den Leichtbau.

Sekisui beschreibt in einer Reihe von Anmeldungen die Herstellung von sogenannten "Acrylic Foams" (z.B. JP 48043054, JP 2002003635, JP 2006045256, JP 2012201704, JP 2012201705, JP 2013075935). In diesen Anmeldungen werden jedoch, zusätzlich zu MMA, deutliche Mengen von Styrol und/oder Methacrylamiden als Comonomere beschrieben. Als Treibmittel dient vornehmlich Harnstoff. Harnstoff als Treibmittel kann jedoch zu Problemen aufgrund einer schlechten Löslichkeit in der Monomermischung führen, was wiederum zu Inhomogenität im Schaum führen kann. Ein weiterer Nachteil von Harnstoff als Treibmittel ist, dass dieser durch seine Zersetzung zu CO und NH₃ als Treibmittel wirkt. Das bedeutet, dass die Schäumtemperatur immer oberhalb der Zersetzungstemperatur von Harnstoff liegen muss und so nur eine sehr schlechte Einstellbarkeit der Schäumtemperatur gegeben ist. Weiterhin sind NH₃ und CO toxisch.

In JP 55139433 wird die Herstellung eines Schaumstoffes beschrieben, der als Comonomer zwischen 4 und 35 Gew% Acryl- bzw. Methacrylsäure, sowie Harnstoff und Wasser als Treibmittel enthält. Dabei handelt es sich nicht im eigentlichen Sinne um einen PMMA-Schaum.

In US 4,816,492 ist die Herstellung von (Meth)acrylat-basierten Schäumen beschrieben, wobei die Monomermischung in Gegenwart von Treibmitteln polymerisiert wird. Als Treibmittel werden halogenierte Kohlenwasserstoffe verwendet. Das Arbeiten mit halogenierten Kohlenwasserstoffen hat jedoch das Problem, dass diese einen stark negativen Einfluss auf die Ozonschicht haben und damit deutlichen Einschränkungen unterliegen. Außerdem sind die Freiheitsgrade des Schäumungsprozesses eingeschränkt, so dass nur begrenzt und jeweils abhängig von einander die Porengrößen, die Porenverteilung und die Schaumdichte eingestellt werden können.

In IL 62693A und EP 0 032 720 wird die Herstellung von einem gezielt sehr grobporigen, geschäumten PMMA beschrieben. Die Herstellung erfolgt über Quellung von treibmittelhaltigen PMMA-Perlpolymerisaten in MMA und das anschließende Expandieren und Polymerisieren, wobei die Expansion vor der Aushärtung stattfindet. Das Treibmittel ist so gewählt, dass es bei einer Temperatur zum Aufschäumen der treibmittelbeladenen PMMA Perlen führt, die unterhalb der Temperatur liegt, die zur Polymerisation des noch flüssigen Reaktionsharzes führt. Der Fokus liegt hierbei auf der Herstellung eines transparenten, geschäumten Kunststoffes. Ein Problem ist bei diesem Verfahren, dass die Polymerisation zum Zeitpunkt der Schäumung noch nicht abgeschlossen ist und damit eine Stabilisierung der Poren nur in sehr engen Prozessparametergrenzen gelingt.

In EP 0 068 439 ist die Herstellung von PMMA basierten Schäumen durch die Polymerisation von MMA in Gegenwart eines Treibmittels und anschließendes Schäumen offenbart. Hervorzuheben ist hier, dass explizit ein Plastifizierungsmittel, insbesondere Methacrylsäureester mit mindestens drei Kohlenstoffatomen in der Alkylgruppe, in Mengen zwischen 5 und 40 Gewichtsteilen bezogen auf MMA eingesetzt werden, um Schäume zu erhalten. Als Treibmittel werden Kohlenwasserstoffe und/oder Fluorkohlenwasserstoffe angegeben. Ziel ist es, Schaumstoffe herzustellen, die große Poren von z.B. etwa 5 mm Durchmesser haben und somit die Transparenz des Basispolymers im Unterschied zu feinporigeren Schäumen erhalten bleibt. Die längerkettigen Alkylreste haben jedoch eine weichmachende Wirkung auf das Matrixpolymer, welches insbesondere für Hartschaumanwendungen aus mechanischen Gründen nicht gewünscht wird. Weiterhin werden auch halogenierte Kohlenwasserstoffe als Treibmittel beschrieben. Auch ist die Lehre der EP 0 068 439 nur auf sehr große Zellen in der Schaummatrix beschränkt.

In FR 1423844 wiederum ist die Herstellung von Blasen enthaltendem PMMA beschrieben, wobei als Treibmittel AIBN dient, welches gleichzeitig den Initiator für die Polymerisation darstellt. Durch die damit begründete hohe Konzentration an Initiator ist die Molmasse des Matrixpolymers im Schaum sehr niedrig. Diese wirkt sich wiederum negativ auf die mechanischen Eigenschaften des Schaums aus. Die in den Beispielen erwähnten Schäume besitzen jedoch nur eine geringe Anzahl von ungleichmäßig verteilten Poren. Auch sind die erhaltenen Dichten nicht aufgeführt.

### Aufgabe

Aufgabe der vorliegenden Erfindung war es damit, ein neues Verfahren zur Herstellung von PMMA-Schäumen zur Verfügung zu stellen, das die diskutierten Nachteile des Standes der Technik nicht aufweist.

Insbesondere war es dazu Aufgabe der vorliegenden Erfindung, eine PMMA-Rezeptur zur Verfügung zu stellen, die einerseits gut aufzuschäumen ist und dabei hohe Freiheitsgrade bzgl. der Einstellung der Porengröße, der Porenverteilung und der Schaumdichte zulässt. Andererseits soll das Material als Schaum mechanisch sehr belastbar sein.

Daraus ergaben sich insbesondere die Aufgaben, eine zur Schäumung geeignete PMMA-Rezeptur zur Verfügung zu stellen, die einerseits die zum Schäumen benötigte, ausreichende Fließfähigkeit und andererseits als Schaum ein hohes Molekulargewicht aufweisen soll, ohne dass dazu Weichmacher eingesetzt werden, oder dass eine Monomer-basierte Zusammensetzung aufgeschäumt wird und anschließend erst auspolymerisiert wird. Diese Aufgaben scheinen sich insbesondere gegenseitig zunächst auszuschließen.

Insbesondere lag der Erfindung die Aufgabe zugrunde, PMMA-Schäume zur Verfügung zu stellen, die einen Schäumungsfaktor von mindestens 2 und damit eine Dichte kleiner 150 kg/m³ aufweisen.

Weiterhin soll in diesem Verfahren auf Treibmittel, die umweltschädlich bzw. toxisch sind bzw. ein hohes ODP (Ozon-Depletion-Potential), wie z.B. bei den meisten Halogenkohlenwasserstoffen der Fall, verzichtet werden.

Weitere nicht explizit genannte Aufgaben können sich aus dem Gesamtzusammenhang der Erfindung, den Ansprüchen, der Beschreibung oder den Beispielen ergeben.

### Lösung

Gelöst werden die Aufgaben durch ein neuartiges Verfahren zur Herstellung von PMMA-Schaumstoffen, bei dem die Herstellung der Schaumstoffe durch eine Polymerisation, wie zum Beispiel eine Plattenpolymerisation von Monomerrmischungen, enthaltend überwiegend MMA, bzw. eines Sirups aus einem überwiegend oder ganz aus MMA bestehenden Polymer und einer überwiegend oder ganz aus MMA zusammengesetzten Monomermischung in Gegenwart eines bei Polymerisationsbedingungen nicht-gasförmigen Treibmittels erfolgen. In einem zweiten Schritt wird die so erhaltene, auspolymerisierte und mit Treibmittel beladene PMMA Platte dann durch Erwärmung aufgeschäumt.

Dieses Verfahren ist insbesondere dadurch gekennzeichnet, dass eine Zusammensetzung, enthaltend 0,01 bis 2,0 Gew%, bevorzugt 0,2 bis 1,5 Gew% eines oder mehrerer Initiatoren, 2 bis 20 Gew%, bevorzugt 3 bis 15 Gew% eines oder mehrerer Treibmittel und 75 bis 97,9 Gew%, bevorzugt 80 bis 96,8 Gew% einer Monomermischung zunächst bei einer Temperatur zwischen 20 °C und 100 °C, bevorzugt zwischen 30 °C und 70 °C polymerisiert und anschließend bei einer Temperatur zwischen 130 °C und 250 °C, bevorzugt zwischen 150 °C und 230 °C geschäumt wird. Neben den genannten Komponenten kann die Zusammensetzung bis zu 22,99 Gew% weiterer Komponenten enthalten. Beispiele für diese weiteren Komponenten sind insbesondere weitere Polymerkomponenten, bei denen es sich nicht um MMA-haltige Polymere handelt, UV-Stabilisatoren, Füllstoffe und Pigmente.

Dabei ist die Monomerrmischung aus 79,70 bis 99,995 mol%, bevorzugt 89,85 bis 99,988 mol% MMA, 0 bis 20 mol%, bevorzugt 0 bis 10 mol% eines oder mehrerer mit MMA copolymerisierbarer Monomere, 0,002 bis 0,5 mol%, bevorzugt 0,005 bis 0,3 mol% Vernetzer und 0,003 bis 1,5 mol%, bevorzugt 0,006 bis 1 mol% Regler zusammengesetzt. Dabei können das MMA und die copolymerisierbaren Monomere vollständig als Monomere eingesetzt werden. In einer besser zu handhabenden Ausführungsform der Erfindung können das MMA und die copolymerisierbaren Monomere jedoch auch zu einem Anteil von bis zu 80 Gew%, bevorzugt zu maximal 50 Gew% als Polymer und/oder Oligomer vorliegen. Der Vorteil eines solchen Sirups, bestehend aus Monomeren und Polymeren bzw. Oligomeren, ist, dass dieser eine höhere Viskosität als eine reine Monomermischung hat und bei der Polymerisation auch einen geringeren Dampfdruck entwickelt.

Bei den mit MMA copolymerisierbaren Monomeren kann es sich insbesondere um Acrylate, wie insbesondere Methyl-, Ethyl-, Propyl- oder n-Butylacrylat handeln. Die Copolymerisation von Acrylaten stabilisiert den Schaumstoff insbesondere bei hohen Schäumungstemperaturen zusätzlich, da diese Schäumungstemperaturen oberhalb der Ceiling-Temperatur des reinen MMA liegen können. Für den Fall, dass keine stabilisierenden Comonomere eingebaut werden, ist eine kürzere Schäumungszeit oder eine entsprechend tiefere Schäumungstemperatur zu bevorzugen. Weitere Beispiele für geeignete Comonomere sind (Meth)acrylsäure, Methacrylate, wie Ethylmethacrylat, Propylmethacryl, n-Butylmethacrylat, tert-Butyl(meth)acrylat, isoPropyl(meth)acrylat, iso-Butyl(meth)acrylat, Styrol, (Meth)acrylamid, ein N-Alkyl(meth)acrylamid mit ein bis 12 Kohlenstoffatomen in der Alkylgruppe, ein Hydroxylalkyl(meth)acrylat mit ein bis 4 Kohlenstoffatomen in der Alkylgruppe, ein Polyether(meth)acrylat, wobei der Polyether ein Molekulargewicht zwischen 200 und 5000 aufweisen kann. Die Comonomere können dabei auch als eine Mischung aus mindestens zwei dieser Comonomere vorliegen. Sollte es sich bei diesen Comonomeren um n-Butyl(meth)acrylat und/oder n-Propyl(meth)acrylat handeln, sollte der Anteil dieser an der Gesamtzusammensetzung insgesamt 3 Gew% nicht überschreiten.

Bei den Vernetzern handelt es sich bevorzugt um ein di-, tri- oder tetra-(Meth)acrylat, um Allyl(meth)acrylat, um Triallylcyanurat, um Triallylisocyanurat oder um eine Mischung, enthaltend mindestens zwei dieser Vernetzer.

Bei dem Regler handelt es sich bevorzugt um eine Verbindung mit ein bis fünf Mercaptangruppen, um ein γ-Terpinen oder um eine Mischung aus mindestens zwei dieser Regler. Besonders bevorzugt handelt es sich bei dem Regler um Penta-erithrit-tetra-thioglycolat, 2-Mercaptoethanol, ein Alkylmercaptan mit 2 bis 12 Kohlenstoffatomen, Thyoclykolsäure, ein Thioglycolat, γ-Terpinen oder eine Mischung aus mindestens zwei dieser Regler.

Ein besonders wichtiger Aspekt der vorliegenden Erfindung ist die Verwendung von Vernetzern und Reglern in der zu schäumenden Zusammensetzung. Diese gegenüber dem Stand der Technik neue Kombination von Kompenenten führt überraschend dazu, dass die Schäumbarkeit von mit Treibmitteln beladenem PMMA deutlich erhöht wird und ein stabiler Schaumstoff mit besonders guter, d.h. enger Porengrößenverteilung erhalten wird. Dieser hier gefundene Effekt war insbesondere nicht zu erwarten und damit überraschend, da normalerweise der Einsatz von Vernetzern die Fließfähigkeit des Polymers behindern würde und somit eine Verschlechterung der Schäumbarkeit hervorrufen sollte.

Besonders positiv wirken sich insbesondere die beschriebene Kombination relativ geringer Mengen des Vernetzers mit den beschriebenen geringen Mengen des Reglers auf die Schäumbarkeit aus, da durch den Einsatz des Vernetzers die Schäumbarkeit derart steigt, dass auf den Einsatz von größeren Mengen Regler verzichtet werden kann. Dies ist von Vorteil, da die mechanischen Eigenschaften des Matrixpolymers, und damit die des PMMA-Schaumes an sich, nicht negativ beeinflusst werden. Ferner sind hohe Molmassen oder - besser - vernetzt Polymere auf Grund der besseren Mechanik des Schaumstoffs sehr erwünscht. Prinzipiell ist für die gute Schäumbarkeit eines Polymers eine bestimmte Plastizität bzw. Fließfähigkeit des Matrixpolymers bei der Schäumungstemperatur wichtig, da bei der Schäumung ein Fließen des Matrixpolymers erfolgt. Ist die Plastizität bzw. Fließfähigkeit des Matrixpolymers bei der Schäumungstemperatur zu gering, findet kein Aufschäumen statt. Es ist allgemein bekannt, dass die Fließfähigkeit eines Polymers mit steigender Molmasse bei gleicher Temperatur gemeinhin abnimmt. Die Anforderungen an die Schäumbarkeit und eine möglichst hohe Molmasse scheinen sich demnach zu wiedersprechen. Überraschend lässt sich dieser Widerspruch durch die Zugabe geringer Mengen Vernetzer und einer nur reduzierten Menge eines Reglers überwinden.

Weiterhin weisen die erfindungsgemäß hergestellten PMMA-Schaumstoffe eine überraschend hohe Festigkeit und gleichzeitig eine überraschend geringe Sprödigkeit auf und können daher z.B. Anwendung im Leichtbau finden. Weiterhin auf Grund der guten Materialeigenschaften auf den Einsatz von Weichmachern, wie z.B. längerkettigen Alkyl(meth)acrylaten oder Phthalaten, die sich nach bisherigen Erkenntnissen positiv auf die Fließfähigkeit bzw. die Schäumbarkeit auswirken, jedoch gleichzeitig die mechanischen Eigenschaften des PMMA-Schaumstoffes, insbesondere die Festigkeit, negativ beeinflussen, verzichtet werden.

Genauso überraschend wurde jedoch auch gefunden, dass nicht gänzlich auf den Regler verzichtet werden kann, sondern dennoch geringe Mengen zugesetzt werden müssen, um ein optimales Schäumen zu gewehrleisten.

Bei den insbesondere geeigneten Treibmitteln handelt es sich um tert-Butanol, n-Heptan, MTBE, Methylethylketon, einen Alkohol mit ein bis vier Kohlenstoffatomen, Wasser, Methylal, Harnstoff, tert-Butylmethylether, iso-Propyl(meth)acrylat und/oder tert-Butyl(meth)acrylat. Dabei sind bei der Verwendung von iso-Propyl(meth)acrylat und/oder tert-Butyl(meth)acrylat diese gleichzeitig Bestandteil der aufgeführten Monomerzusammensetzung und werden zunächst in die bei der Polymerisation gebildeten Polymere ganz oder teilweise einpolymerisiert. Bei der Schäumung werden darauf unter Abspaltung von Propen bzw. iso-Buten im Polymer (Meth)acrylsäure-Wiederholungseinheiten gebildet. In einer besonderen Ausführungsform können auch Polymere verwendet werden, die aus großen Anteilen dieser Monomere oder komplett aus diesen Monomeren hergestellt wurden. Durch die Verwendung solcher einpolymerisierbaren bzw. polymerisierten, Treibmittel freisetzende Comonomere ist es beispielsweise möglich, besonders kleine und regelmäßige Poren zu erhalten.

Besonders geeignete Treibmittel sind tert-Butyl(meth)acrylat, iso-Propyl(meth)acrylat, tert-Butanol, iso-Propanol und Poly(tert-butyl(meth)acrylat).

Die Polymerisation erfolgt bevorzugt in einem formgebenden Gefäß, insbesondere in Form einer Kammerpolymerisation zwischen zwei Platten, wie z.B. Glasplatten. Dabei kann es sich beispielswiese im einfachsten Fall um eine rechteckige Wanne handeln. Durch die Polymerisation in einer solchen Wanne erhält man später eine Platte, deren Dicke durch den Füllstand der Wanne bzw. den Plattenabstand bestimmt wurde. Darüber hinaus sind jedoch auch komplexere Formen als Gefäß denkbar. Bevorzugt erfolgt die Polymerisation bei einer Temperatur zwischen 30 und 70 °C. Dabei können als Initiatoren neben allgemein bekannt Radikalstartern, wie zum Beispiel Peroxide oder Azoinitiatoren, auch Redoxsysteme oder UV-Initiatoren eingesetzt werden. Dabei betreffen die Polymerisationstemperaturen unterhalb von 40 °C insbesondere diese RedoxSysteme und UV-Initiatoren. Die UV-Initiatoren werden durch Bestrahlung mit entsprechenden UV-Licht initiiert, während es sich bei den Redox-Initatoren um Zweikomponentensysteme handelt, deren Initiierung durch Mischen der beiden Komponenten und der Monomere erfolgt.

Das Schäumen kann anschließend in dem gleichen Gefäß erfolgen, wobei die Volumenzunahme in diesem Fall auf eine Richtung, die offene Seite des Gefäßes beschränkt wird. Das polymerisierte Material kann jedoch auch freiliegend aufgeschäumt werden. Bevorzugt erfolgt das Schäumen in einem Ofen. Alternativ ist es auch möglich, das Schäumen durch Bestrahlung mit IR-Strahlung, insbesondere mit einer Wellenlänge zwischen 0,78 und 2,20, bevorzugt zwischen 1,20 und 1,40 µm, zu bewirken. Eine weitere Alternative stellt das Aufschäumen mit Mikrowellen dar. Auch die Kombination aus verschiedenen Methoden, wie IR-Strahlung, Mikrowellen und/oder Heizen in einem Ofen ist denkbar.

Sowohl das Schäumen als auch die zuvor erfolgte Polymerisation können jeweils in mehreren Temperaturstufen erfolgen. Bei der Polymerisation kann durch eine spätere Erhöhung der Temperatur zusätzlich der Umsatz gesteigert und der Restmonomergehalt damit verringert werden. Beim Schäumen kann durch eine stufenweise Erhöhung der Schäumungstemperatur die Porenverteilung, die Porengröße und die Anzahl der Poren beeinflusst werden.

Optional kann das Verfahren auch derart durchgeführt werden, dass die Polymerisation nur unvollständig, in diesem Fall bevorzugt zu einem Umsatz von mindestens 80% durchgeführt wird und die endgültige Auspolymerisation beim Schäumen erfolgt. Ein solches Verfahren hat den Vorteil, dass zu Beginn des Schaumvorgangs die verbliebenen Monomere einen weichmachenden Effekt haben, ohne dass im fertigen Schaumstoff eine weichmachende Verbindung verbleiben würde. Somit würde bei einer solchen Ausführungsform die Polymerisation und das Schäumen teilweise - bei einer Schäumungstemperatur - simultan erfolgen.

Neben dem erfindungsgemäßen Verfahren sind auch PMMA-Schaumstoffe, die über ein solches Verfahren beispielsweise herstellbar sind, Bestandteil der vorliegenden Erfindung. Ein solcher PMMA-Schaumstoff ist dabei dadurch gekennzeichnet, dass der Feststoffanteil dieses Schaums zu mindestens 95 Gew% aus einem Polymer, zusammengesetzt aus 79,70 bis 99,995 mol% MMA, 0 bis 20 mol% eines oder mehrerer mit MMA copolymerisierbarer Monomere, 0,002 bis 0,5 mol% Vernetzer, 0,003 bis 1,5 mol% Reglerrest und einem Initiatorrest, besteht. Weiterhin weist der Schaumstoff eine Dichte zwischen 25 und 400 kg/m³, bevorzugt zwischen 40 und 250 kg/m³ auf. Bevorzugt sind insbesondere PMMA-Schaumstoffe, in denen das Polymer ausschließlich aus MMA, einem Initiator, einem oder mehreren Vernetzern, ausgewählt aus di-, tri- oder tetra-(Meth)acrylaten, Allyl(meth)acrylat, Triallylcyanurat und/oder Triallylisocyanurat, und einem oder mehreren Reglern, ausgewählt aus Verbindungen mit ein bis fünf Mercaptangruppen und/oder γ-Terpinen, bevorzugt ausgewählt aus Penta-erithrit-tetra-thioglycolat, 2-Mercaptoethanol, Alkylmercaptanen mit 2 bis 12 Kohlenstoffatomen, Thyoclykolsäure, Thioglycolat und/oder γ-Terpinen, gebildet wurde.

Die erfindungsgemäß hergestellten PMMA-Schaumstoffe sowie die erfindungsgemäßen PMMA-Schaumstoffe können vielfältig Verwendung finden. Beispiele für solche Verwendungen sind witterungsbeständige Isolationsmaterialien, Kernmaterial für Sandwich Composites, im Leichtbau, als Verpackungsmaterial, als Energieabsorber in Crashelementen, in architektonischen Bauelementen, als Diffusor in lichttechnischen Anwendungen, im Möbelbau, im Bootsbau, im Fahrzeugbau, in der Luftfahrtindustrie oder im Modellbau.

### Beispiele

### Vergleichsbeispiel 1

In diesem Beispiel wurde ein PMMA-Schaum aus einer Zusammensetzung, enthaltend einen Regler, jedoch keinen Vernetzer, hergestellt.

Eine Mischung aus 281,13 g eines Polymethacrylats, hergestellt ausschließlich aus MMA, 1124,52 g MMA, 0,75 g 2,2'-Azobis-(2,4-dimethylvaleronitril), 3,60 g Pentaerythrittetrathioglycolat als Regler, 15,00 g n-Butylacrylat und 75,00 g tert-Butylmethacrylat wurde zwischen zwei seitlich mit einem Gummistreifen abgedichtete Glasplatten der Abmessungen 400 mm * 300 mm und einem Abstand zueinander von 10 mm für 24 h bei 42 °C polymerisiert. Darauf erfolgte 4 h Tempern bei 115 °C. Nach entfernen der Glasplatten wurde schließlich die erhaltene PMMA-Platte 1 h bei 215 °C in einem Ofen geschäumt. Es wurde ein grobporiger, sehr unregelmäßiger Schaumstoff erhalten.

### Beispiel 1

In diesem erfindungsgemäßen Beispiel wurde ein PMMA-Schaum aus einer Zusammensetzung, enthaltend eine relativ geringe Menge Regler sowie eine relativ geringe Menge Vernetzer, hergestellt.

Eine Mischung aus 281,25 g eines Polymethacrylats, hergestellt ausschließlich aus MMA, 1125,00 g MMA, 0,75 g 2,2'-Azobis-(2,4-dimethylvaleronitril), 0,60 g Pentaerythrittetrathioglycolat als Regler, 15,00 g n-Butylacrylat, 75,00 g tert-Butylmethacrylat, 1,50 g Rewopol SB-DO 75 als Trennmittel und 0,90 g Ethylenglycoldimethacrylat als Vernetzer wurde zwischen zwei seitlich mit einem Gummistreifen abgedichtete Glasplatten der Abmessungen 400 mm * 300 mm und einem Abstand zueinander von 10 mm für 24 h bei 42 °C polymerisiert. Darauf erfolgte 4 h Tempern bei 115 °C. Nach entfernen der Glasplatten wurde schließlich die erhaltene PMMA-Platte 1 h bei 215 °C in einem Ofen geschäumt. Die Mischung schäumte sehr gut und die Poren waren deutlich feiner als bei dem Schaum, erhalten gemäß Vergleichsbeispiel 1.
Das Trennmittel hat erfahrungsgemäß keinen Einfluss auf die Polymerisation oder den Schäumvorgang und dient einzig zur leichteren Entfernung der Glasplatten von dem Polymerblock.

### Beispiel 2 bis 5

In diesem erfindungsgemäßen Beispiel wurde ein PMMA-Schaum aus verschiedenen Zusammensetzungen, enthaltend variierende Mengen Regler sowie eine relativ geringe Menge Vernetzer, hergestellt.

Mischungen jeweils aus einem Polymethacrylat (Menge siehe Tab.1), hergestellt ausschließlich aus MMA, MMA (Menge siehe Tab.1), 0,75 g 2,2'-Azobis-(2,4-dimethylvaleronitril), Pentaerythrittetrathioglycolat als Regler (Menge siehe Tab.1), 15,00 g n-Butylacrylat, 75,00 g tert-Butylmethacrylat, 1,50 g Rewopol SB-DO 75 und 0,90 g Ethylenglycoldimethacrylat als Vernetzer wurde zwischen zwei seitlich mit einem Gummistreifen abgedichtete Glasplatten der Abmessungen 400 mm * 300 mm und einem Abstand zueinander von 10 mm für 24 h bei 42 °C polymerisiert. Darauf erfolgte 4 h Tempern bei 115 °C. Nach entfernen der Glasplatten wurde schließlich die erhaltene PMMA-Platte 1 h bei 205 °C in einem Ofen geschäumt. Alle vier Mischungen schäumten sehr gut auf. Je mehr Regler eingesetzt wurde, desto schneller erfolgte das Schäumen.
Die Poren waren deutlich feiner als bei dem Schaum, erhalten gemäß Vergleichsbeispiel 1.

**Tabelle 1**

| Komponente | Beispiel 2 | Beispiel 3 | Beispiel 4 | Beispiel 5 |
|---|---|---|---|---|
| PMMA | 281,25 g | 281,19 g | 281,13 | 281,01 g |
| MMA | 1125,00 g | 1124,76 g | 1124,52 | 1124,04 g |
| Pentaerythrittetrath -ioglycolat | 0,60 g | 0,90 g | 1,20 g | 1,80 g |

### Beispiel 6

In diesem erfindungsgemäßen Beispiel wurde ein PMMA-Schaum aus einer Zusammensetzung, enthaltend Regler und Vernetzer, hergestellt. Dabei wurde hier kein Treibmittel verwendet, welches aus einem copolymerisierbaren Bestandteil der Zusammensetzung freigesetzt wird, sondern frei in dieser vorliegt.

Eine Mischung aus 281,25 g eines Polymethacrylats, hergestellt ausschließlich aus MMA, 1125,00 g MMA, 0,75 g 2,2'-Azobis-(2,4-dimethylvaleronitril), 0,60 g Pentaerythrittetrathioglycolat als Regler, 15,00 g n-Butylacrylat, 75,00 g Isopropanol, 1,50 g Rewopol SB-DO 75 und 0,90 g Ethylenglycoldimethacrylat als Vernetzer wurde zwischen zwei seitlich mit einem Gummistreifen abgedichtete Glasplatten der Abmessungen 400 mm * 300 mm und einem Abstand zueinander von 10 mm für 24 h bei 42 °C polymerisiert. Darauf erfolgte 4 h Tempern bei 115 °C. Nach entfernen der Glasplatten wurde schließlich die erhaltene PMMA-Platte 1 h bei 215 °C in einem Ofen geschäumt. Es wurde ein eher grobporiges, sehr gut aufgeschäumtes Material erhalten.

### Vergleichsbeispiel 2

In diesem Beispiel wurde ein PMMA-Schaum aus einer Zusammensetzung, enthaltend einen Regler, jedoch keinen Vernetzer, hergestellt.

Eine Mischung aus 162,21 g eines Polymethacrylats, hergestellt ausschließlich aus MMA, 648,56 g MMA, 0,85 g 2,2'-Azobis-(2,4-dimethylvaleronitril), 0,68 g Pentaerythrittetrathioglycolat als Regler und 37,40 g tert-Butylmethylether wurde zwischen zwei seitlich mit einem Gummistreifen abgedichtete Glasplatten der Abmessungen 400 mm * 300 mm und einem Abstand zueinander von 10 mm für 3 h bei 50 °C polymerisiert. Darauf erfolgte 4 h Tempern bei 115 °C. Nach entfernen der Glasplatten wurde schließlich die erhaltene PMMA-Platte 1 h bei 215 °C in einem Ofen geschäumt. Die Probe konnte nicht geschäumt werden. Es entstanden lediglich kleine Blasen im Polymerisat.

### Vergleichsbeispiel 3

In diesem Beispiel wurde ein PMMA-Schaum aus einer Zusammensetzung, enthaltend gegenüber Vergleichsbeispiel 2 geringere Mengen Regler und keinen Vernetzer, hergestellt. Weiterhin wurde gegenüber Vergleichsbeispiel 2 die Menge des Treibmittels deutlich erhöht.

Eine Mischung aus 162,00 g eines Polymethacrylats, hergestellt ausschließlich aus MMA, 648,00 g MMA, 0,85 g 2,2'-Azobis-(2,4-dimethylvaleronitril), 0,34 g Pentaerythrittetrathioglycolat als Regler und 65,50 g tert-Butylmethylether wurde zwischen zwei seitlich mit einem Gummistreifen abgedichtete Glasplatten der Abmessungen 400 mm * 300 mm und einem Abstand zueinander von 10 mm für 3 h bei 50 °C polymerisiert. Darauf erfolgte 4 h Tempern bei 115 °C. Nach entfernen der Glasplatten wurde schließlich die erhaltene PMMA-Platte 1 h bei 215 °C in einem Ofen geschäumt. Die Probe konnte nicht geschäumt werden. Es entstanden lediglich kleine Blasen im Polymerisat.

### Vergleichsbeispiel 4

In diesem Beispiel wurde ein PMMA-Schaum aus einer Zusammensetzung, enthaltend geringere Mengen Regler und keinen Vernetzer, hergestellt. Gegenüber Vergleichsbeispiel 2 wurde das Treibmittel variiert.

Eine Mischung aus 167,00 g eines Polymethacrylats, hergestellt ausschließlich aus MMA, 668,00 g MMA, 0,85 g 2,2'-Azobis-(2,4-dimethylvaleronitril), 0,34 g Pentaerythrittetrathioglycolat als Regler und 31,88 g tert-Butanol wurde zwischen zwei seitlich mit einem Gummistreifen abgedichtete Glasplatten der Abmessungen 400 mm * 300 mm und einem Abstand zueinander von 10 mm für 3 h bei 50 °C polymerisiert. Darauf erfolgte 4 h Tempern bei 115 °C. Nach entfernen der Glasplatten wurde schließlich die erhaltene PMMA-Platte 1 h bei 215 °C in einem Ofen geschäumt. Die Probe konnte nicht geschäumt werden. Es entstanden lediglich kleine Blasen im Polymerisat.

## Patentansprüche

1. Verfahren zur Herstellung eines Polymethacrylat-Schaumstoffs, **dadurch gekennzeichnet, dass** eine Zusammensetzung, enthaltend 0,01 bis 2,0 Gew% eines Initiators, 2 bis 20 Gew% eines Treibmittels und 75 bis 97,9 Gew% einer Monomermischung, wobei die Monomermischung zusammengesetzt ist aus 79,70 bis 99,995 mol% MMA, 0 bis 20 mol% eines oder mehrerer mit MMA copolymerisierbarer Monomere, 0,002 bis 0,5 mol% Vernetzer und 0,003 bis 1,5 mol% Regler und zu 0 bis 80 Gew% als Polymer und/oder Oligomer vorliegen kann, bei einer Temperatur zwischen 20 °C und 100 °C polymerisiert und anschließend zwischen 130 °C und 250 °C geschäumt wird.

2. Verfahren gemäß Anspruch 1, **dadurch gekennzeichnet, dass** die Zusammensetzung 0,2 bis 1,5 Gew% des Initiators, 3 bis 15 Gew% des Treibmittels und 80 bis 96,8 Gew% einer Monomermischung enthält, wobei die Monomermischung zusammengesetzt ist aus 89,85 bis 99,988 mol% MMA, 0 bis 10 mol% eines oder mehrerer mit MMA copolymerisierbarer Monomere, 0,005 bis 0,3 mol% Vernetzer und 0,006 bis 1 mol% Regler und zu 0 bis 50 Gew% als Polymer und/oder Oligomer vorliegen.

3. Verfahren gemäß Anspruch 1 oder 2, **dadurch gekennzeichnet, dass** die Polymerisation bei einer Temperatur zwischen 30 °C und 70 °C und das Schäumen bei einer Temperatur zwischen 150 °C und 230 °C erfolgen.

4. Verfahren gemäß mindestens einem der Ansprüche 1 bis 3, **dadurch gekennzeichnet, dass** es sich bei dem Vernetzer um ein di-, tri- oder tetra-(Meth)acrylat, um Allyl(meth)acrylat, um Triallylcyanurat, um Triallylisocyanurat oder um eine Mischung, enthaltend mindestens zwei dieser Vernetzer, handelt.

5. Verfahren gemäß mindestens einem der Ansprüche 1 bis 4, **dadurch gekennzeichnet, dass** es sich bei dem Regler um eine Verbindung mit ein bis fünf Mercaptangruppen, um ein γ-Terpinen oder um eine Mischung aus mindestens zwei dieser Regler handelt.

6. Verfahren gemäß Anspruch 5, **dadurch gekennzeichnet, dass** es sich bei dem Regler um Penta-erithrit-tetra-thioglycolat, 2-Mercaptoethanol, ein Alkylmercaptan mit 2 bis 12 Kohlenstoffatomen, Thyoclykolsäure, ein Thioglycolat, γ-Terpinen oder eine Mischung aus mindestens zwei dieser Regler handelt.

7. Verfahren gemäß mindestens einem der Ansprüche 1 bis 6, **dadurch gekennzeichnet, dass** es sich bei den Comonomeren um (Meth)acrylsäure, Methylacrylat, Ethyl(meth)acrylat, Propyl(meth)acryl, n-Butyl(meth)acrylat, tert-Butyl(meth)acrylat, iso-Propyl(meth)acrylat, iso-Butyl(meth)acrylat, Styrol, (Meth)acrylamid, ein N-Alkyl(meth)acrylamid mit ein bis 12 Kohlenstoffatomen in der Alkylgruppe, ein Hydroxylalkyl(meth)acrylat mit ein bis 4 Kohlenstoffatomen in der Alkylgruppe oder um Mischungen aus mindestens zwei dieser Comonomere handelt, wobei der Anteil an n-Butyl(meth)acrylat und n-Propyl(meth)acrylat insgesamt 3 Gew% nicht überschreitet.

8. Verfahren gemäß mindestens einem der Ansprüche 1 bis 7, **dadurch gekennzeichnet, dass** die Polymerisation und/oder die Schäumung stufenweise bei unterschiedlichen Temperaturen erfolgen.

9. Verfahren gemäß mindestens einem der Ansprüche 1 bis 8, **dadurch gekennzeichnet, dass** die Polymerisation und das Schäumen zumindest teilweise simultan erfolgen.

10. Verfahren gemäß mindestens einem der Ansprüche 1 bis 9, **dadurch gekennzeichnet, dass** es sich es sich bei dem Treibmittel tert-Butyl(meth)acrylat, iso-Propyl(meth)acrylat, tert-Butanol, iso-Propanol , tert-Butylmethylether und Poly(tert-butyl(meth)acrylat) handelt, wobei iso-Propyl(meth)acrylat und/oder tert-Butyl(meth)acrylat gleichzeitig Bestandteil der aufgeführten Monomerzusammensetzung sind und in die daraus gebildeten Polymere ganz oder teilweise einpolymerisiert werden.

11. PMMA-Schaum, **dadurch gekennzeichnet, dass** der Feststoffanteil dieses Schaums zu mindestens 95 Gew% aus einem Polymer, hergestellt aus einer Mischung, bestehend aus 79,70 bis 99,995 mol% MMA, 0 bis 20 mol% eines oder mehrerer mit MMA copolymerisierbarer Monomere, 0,002 bis 0,5 mol% Vernetzer, 0,003 bis 1,5 mol% Regler und einem Initiatorrest, und dass der Schaum eine Dichte zwischen 25 und 400 kg/m³ aufweist.

12. PMMA-Schaum gemäß Anspruch 11, **dadurch gekennzeichnet, dass** die PMMA-Schaum eine Dichte zwischen 40 und 250 kg/m³ aufweist.

13. PMMA-Schaum gemäß Anspruch 11 oder 12, **dadurch gekennzeichnet, dass** das Polymer ausschließlich aus MMA, einem Initiator und aus den Komponenten gemäß den Ansprüchen 4 bis 7 gebildet wurde.
